# EUROPÄISCHE PATENTSCHRIFT

(11) **EP 2 409 069 B1**
(45) Veröffentlichungstag und Bekanntmachung des Hinweises auf die Patenterteilung: **03.04.2013**
(21) Anmeldenummer: 09781859.5
(22) Anmeldetag: 14.08.2009
(51) Int. Cl.: F16N 7/30, F16N 25/00, F16N 7/32

(54) **VORRICHTUNG ZUM AUFTEILEN EINES SCHMIERMEDIUMS**
DEVICE FOR SEPARATING A LUBRICATING MEDIUM
DISPOSITIF DE RÉPARTITION D'UN FLUIDE DE LUBRIFICATION

(30) Priorität: 19.03.2009 DE 102009013900
(43) Veröffentlichungstag der Anmeldung: 25.01.2012
(73) Patentinhaber: Baier & Köppel GmbH & Co. KG, 91257 Pegnitz (DE)
(72) Erfinder: KÖPPEL, Bernhard, 91257 Pegnitz (DE); KÜRZDÖRFER, Markus, 91257 Pegnitz (DE)
(74) Vertreter: Zech, Stefan Markus
(86) Internationale Anmeldenummer: PCT/EP2009/060557
(87) Internationale Veröffentlichungsnummer: WO 2010/105704

(56) Entgegenhaltungen:
- WO-A-2005/022025
- DE-A1-102008 005 825
- DE-U1- 9 303 631
- DE-U1- 29 609 855
- US-A- 5 333 640

## Beschreibung

Die Erfindung betrifft eine Vorrichtung zum Aufteilen eines in einer Gasströmung transportierten viskosen Schmiermediums nach Anspruch 1.

Derartige Schmiervorrichtungen sind prinzipiell im Stand der Technik bekannt.

Beispielsweise zeigt die DE 41 26 198 C1 eine Vorrichtung zum Aufteilen eines in einem Strömungskanal in einem Trägermedium herangeführten, tropfenförmigen Schmiermedium in zwei voneinander getrennte Ausgangsströmungen. Die Vorrichtung weist einen der Eingangsströmung zugeordneten Strömungskanal und zwei den Ausgangsströmungen zugeordnete Abströmkanäle auf. Am Ende des Strömungskanals schließt sich ein Zerteilerzylinder an, der aus einem porösen Werkstoff gefertigt ist, so dass Mikrotropfen des Schmiermediums lageunabhängig in den Abströmkanälen mitgenommen werden.

Der Aufwand bei der Herstellung einer Schmiervorrichtung gemäß der DE 41 26 198 C1 wird jedoch als vergleichsweise hoch empfunden.

Die WO 2005/022025 A1 beschreibt eine Vorrichtung zum Aufteilen eines in einer Gasströmung transportierten viskosen Mediums. Die Vorrichtung ist zum Aufteilen eines in einer Luftströmung transportierten Öls ausgebildet und weist ein rohrförmiges Gehäuse auf. Das rohrförmige Gehäuse weist an einer Stirnseite einen Zuströmanschluss für ein mit der Vorrichtung aufzuteilendes Öl-Luft-Gemisch auf. Der Zuströmanschluss ist durch eine mit einem Innengewinde versehene Bohrung im rohrförmigen Gehäuse ausgebildet. In das Innengewinde des Zuströmanschlusses ist eine Rohrleitung einschraubbar, über welche das aufzuteilende Öl-Luft-Gemisch zuströmt.

Der Erfindung liegt die Aufgabe zu Grunde, eine Vorrichtung zum Aufteilen eines in einer Gasströmung transportierten viskosen Schmiermediums der oben genannten Art dahin gehend weiter zu bilden, dass der Herstellungsaufwand reduziert werden kann.

Diese Aufgabe wird durch eine Vorrichtung nach Patentanspruch 1 gelöst.

Die Aufgabe wird insbesondere durch einen Vorrichtung zum Aufteilen eines in einer Gasströmung transportierten viskosen Schmiermediums, mit einem Gehäuse mit einem einem Zuströmungskanal zugeordneten Zuströmanschluss und mindestens zwei entsprechenden Abströmkanälen zugeordneten Abströmanschlüssen gelöst, wobei unter einem vorbestimmten Mindestdruck und/oder einer vorbestimmten Mindestströmgeschwindigkeit der Gasströmung das Schmiermedium entlang Wänden des Zuströmkanals führbar ist/geführt ist, wobei zwischen dem Zuströmkanal und den mindestens zwei Abströmkanälen eine Zylinderscheibe mit zentraler Bohrung angeordnet ist, wobei die Zylinderscheibe aus einem gegenüber dem Schmiermedium dichten Material gebildet ist, und wobei in der Zylinderscheibe mindestens zwei weitere, dezentrale, axiale Bohrungen vorgesehen sind, die in mindestens zwei Abströmkanäle münden.

Ein wesentlicher Punkt der Erfindung liegt darin, dass zwischen Zuströmkanals und den Abströmkanäle eine Zylinderscheibe angeordnet ist, die eine zentrale Bohrung sowie mindestens zwei weitere, dezentrale, axiale Bohrungen aufweist. Derartige Bohrungen sind vergleichsweise wenig aufwendig in der Herstellung. Dies reduziert den Aufwand bei der Herstellung der Vorrichtung. Eine gleichmäßige, lageunabhängige Verteilung des Schmierstoffes bleibt im Wesentlichen gewährleistet. Dies kann folgendermaßen erklärt werden.

Unter Einwirkung der Gasströmung bzw. mittels Druckluft wird der Schmierstoff an den Leitungsinnenwänden des Zuströmkanals zu der Zylinderscheibe gefördert. Der derart geförderte Schmierstoff trifft also auf die Zylinderscheibe und staut sich an dieser. Der den Schmierstoff fördernde Gasstrom strömt durch die zentrale Bohrung. Durch die Querschnittsverengung nimmt die Geschwindigkeit zu. Somit entsteht auf einer dem Zuströmkanal zugewandten Seite der Zylinderscheibe ein Unterdruck, der ein Ansaugen des Schmierstoffes durch die dezentralen Bohrungen bewirkt. Dadurch wird der Schmierstoff gleichmäßig über die dezentralen Bohrungen, die in die entsprechenden Abströmkanäle münden, diesen zugeführt.

An dieser Stelle sei darauf hingewiesen, dass der Begriff "Bohrung" einschränkend verstanden werden kann, nämlich derartig, dass die Bohrungen durch Bohren hergestellt sind. Allgemein können die Bohrungen jedoch auch mittels anderer Verfahren, wie beispielsweise Spritzguss oder dergleichen hergestellt sein. Auch solche allgemeinen Bohrungen oder Durchgangsöffnungen sollen in einer allgemeinen Betrachtung von der vorliegenden Erfindung umfasst sein. Die Bohrungen können im Wesentlichen zylinderförmig ausgebildet sind bzw. einen kreisförmigen Querschnitt aufweisen, können aber auch eine abweichende Gestalt aufweisen, beispielsweise eine eckige, insbesondere viereckige oder einen ovalen Querschnitt aufweisen. Die Zylinderscheibe kann Bestandteil eines anders ausgestalteten Körpers sein. Vorzugsweise ist die Zylinderscheibe jedoch ein eigenständiges Element. Die Zylindergestalt ist nicht unbedingt erforderlich.

Vorzugsweise ist in einem an die Zylinderscheibe angrenzenden Abschnitt des Zuströmkanals eine insbesondere ringförmige und/oder zylinderförmige und/oder konische Querschnittserweiterung ausgebildet. Insbesondere kann die Querschnittserweiterung eine scharfe Kante gegenüber dem Zuströmkanal und/oder gegenüber einem Abschnitt, in dem die Zylinderscheibe vorgesehen ist, aufweisen. Vorzugsweise ist der Durchmesser der Querschnittserweiterung größer als der Durchmesser der Zylinderscheibe. Es kann jedoch alternativ die Zylinderscheibe größer als die Querschnittserweiterung sein bzw. gleich groß wie diese sein. Im Allgemeinen gilt dies auch für den Fall, dass keine Querschnittserweiterung vorgesehen ist. So kann ein Querschnitt eines an die Zylinderscheibe angrenzenden Abschnittes des zuständigen Kanals entweder größer oder kleiner als diese sein oder die gleiche Größe aufweisen. Die Querschnittserweiterung hat den Vorteil, dass der Gasstrom und das Schmiermedium besonders effektiv voneinander getrennt werden und Letzteres sich kontinuierlich als Flüssigkeitspolster über den Umfang der Querschnittserweiterung ausbreitet.

Gegenüber der in der DE 41 26 898 C1 offenbarten Lösung zeichnet sich die Erfindung weiterhin dadurch aus, dass durch eine exakt vorbestimmte Anzahl von dezentralen, axialen Bohrungen, die weiterhin genau in ihrer Geometrie definiert hergestellt werden können, ein exakteres Aufteilungsverhältnis und eine definiertere Zuteilung des Schmiermediums gewährleistet wird. Darüber hinaus hat es sich gezeigt, dass das mit der Erfindung propagierte Ansaugen des Schmiermediums mittels eines durch Gasströmung hergestellten Unterdrucks die exaktere Aufteilung und die definierte Zuteilung erheblich begünstigen.

Vorzugsweise weisen mindestens zwei der dezentralen Bohrungen, vorzugsweise alle dezentralen Bohrungen einen gleichen Abstand zu einem Zylinderscheibenzentrum auf. Eine derartige Maßnahme verbessert die Gleichmäßigkeit der Schmierstoffaufteilung.

In einer konkreten Ausführungsform sind vier dezentrale Bohrungen vorgesehen. Die vier dezentralen Bohrungen können insbesondere in quadratischer Konstellation angeordnet sein. Eine derartige Ausführungsform ist einfach in der Herstellung.

In bevorzugten Ausführungsformen weist der Mittelpunkt mindestens einer, vorzugsweise aller dezentraler Bohrungen einen Abstand zum Zylinderscheibenzentrum auf, der größer als 1/5, vorzugsweise größer als 1/3, weiter vorzugsweise größer als 1/2, insbesondere größer als 3/4 des Radius der Zylinderscheibe vom Mittelpunkt und/oder Rand der Zylinderscheibe messend ist. Vorzugsweise steht der Radius mindestens einer, vorzugsweise aller dezentralen Bohrungen gegenüber dem Radius der zentralen Bohrung in einem Verhältnis von weniger als 2:3, vorzugsweise weniger als 1:2, weiter vorzugsweise weniger als 1:3, insbesondere weniger als 1:5.

In einer alternativen Ausführungsform weisen mindestens zwei dezentrale Bohrungen einen unterschiedlichen Querschnitt bezüglich Größe und/oder Form auf. Bei einer derartigen Ausführungsform können unterschiedliche Schmierstoffanforderungen verschiedener Schmierstellen entsprechend über Größe und/oder Form der dezentralen Bohrungen berücksichtigt werden. Eine derartige Ausführungsform ermöglicht eine besonders einfache Voreinstellung des Schmierstoftbedarfs.

In einer weiteren alternativen Ausführungsform weisen mindestens zwei dezentrale Bohrungen einen voneinander abweichenden Abstand zu dem Zylinderscheibenzentrum auf. Auch eine derartige Maßnahme kann auf besonders einfache Weise einen unterschiedlichen Schmierstoffbedarf durch eine Voreinstellung berücksichtigen.

In einer bevorzugten Ausführungsform münden mindestens zwei dezentrale Bohrungen in denselben Abströmkanal. Alternativ können mindestens zwei dezentrale Bohrungen auch in zwei verschiedene Abströmkanäle münden, wobei diese sich zu einem gemeinsamen Kanal vereinigen und beispielsweise entsprechend geförderter Schmierstoff aus demselben Abströmanschluss austritt. Beispielsweise können je zwei sich bezüglich des Zylinderscheibenzentrums gegenüber liegende dezentrale Bohrungen derart vereinigt werden. Insgesamt wird die Gleichmäßigkeit der Schmierstoffverteilung weiter verbessert.

Vorzugsweise weisen mindestens drei, vorzugsweise alle dezentralen Bohrungen einen gleichen Abstand zu einer jeweilig benachbarten dezentralen Bohrung auf. Dadurch kann die Gleichmäßigkeit der Schmierstoffverteilung verbessert werden.

Von Vorteil ist es, wenn eine Dicke der Zylinderscheibe gegenüber einem Durchmesser derselben in einem Verhältnis von weniger als 1:1, insbesondere weniger als 1:2, vorzugsweise weniger als 1:3, weiter vorzugsweise weniger als 1:5 steht. Ebenso ist es vorteilhaft, wenn eine Längserstreckung der zentralen Ausnehmung gegenüber einem Durchmesser derselben in einem Verhältnis von weniger als 5:1, insbesondere 3:1, vorzugsweise weniger als 1:1 steht. Bei derartigen Dimensionierungen erfolgt eine Förderung des Schmierstoffes durch die dezentralen Bohrungen aufgrund des weiter oben beschriebenen Druckunterschiedes besonders effektiv.

In einer alternativen Ausführungsform kann eine dem Zuströmungskanal zugewandte Seite der Zylinderscheibe konkav ausgebildet sein. Dies verbessert ein Hinströmen des Schmierstoffes zu den dezentralen Bohrungen und insbesondere ein Fokussieren des Luftstroms auf die zentrale Bohrung.

In einer alternativen Ausführungsform können die dezentralen Bohrungen als auf der Mantelfläche der Zylinderscheibe verlaufende rinnenförmige Ausnehmungen ausgebildet sein. Durch entsprechende Kontaktierung der Zylinderscheibe mit einer Kanalinnenwand des Zuströmkanals können die dezentralen Bohrungen vollständig umrandet werden. Eine derartige Zylinderscheibe ist besonders einfach in der Herstellung.

Weitere Ausführungsformen ergeben sich aus den Unteransprüchen. Nachfolgend wird die Erfindung auch hinsichtlich weiterer Merkmale und Vorteil anhand von Ausführungsbeispielen beschrieben, die anhand der Abbildungen näher erläutert werden.

Hierbei zeigen:
- Fig. 1 Ein Aufbauschema eines Öl-Luft-Sprühschmiersystems;
- Fig. 2 eine erfindungsgemäße Vorrichtung zum Aufteilen eines Schmiermediums; und
- Fig. 3 einen Querschnitt durch eine Zylinderscheibe entlang der Linie III-III in Fig. 2.

In der nachfolgenden Beschreibung werden für gleiche und gleich wirkende Teile dieselben Bezugsziffern verwendet.

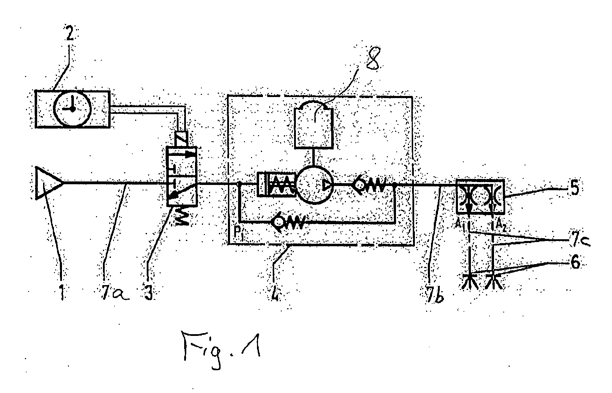

Fig. 1 zeigt ein Aufbauschema eines Öl-Luft-Sprühschmiersystems.

Über ein Druckluftleitung 7a wird Druckluft aus einer Druckluftquelle 1 über ein Magnetventil 3 einer Pneumatikpumpe 4 bzw. einem Schmierstoffbehälter 8 zugeführt. Das Magnetventil 3 wird über eine Steuerung 2 gesteuert.

Aus der Pneumatikpumpe 4 wird ein Öl-Luft-Gemisch über eine Druckluft-Schmierstoff-Leitung 7b einem Schmierstoffverteiler 5 zugeführt. In dem Schmierstoffverteiler 5 wird der Schmierstoff aufgeteilt und über Druckluft-Schmierstoff-Leitungen 7c Sprühdüsen 6 bzw. entsprechenden Schmierstellen zugeführt.

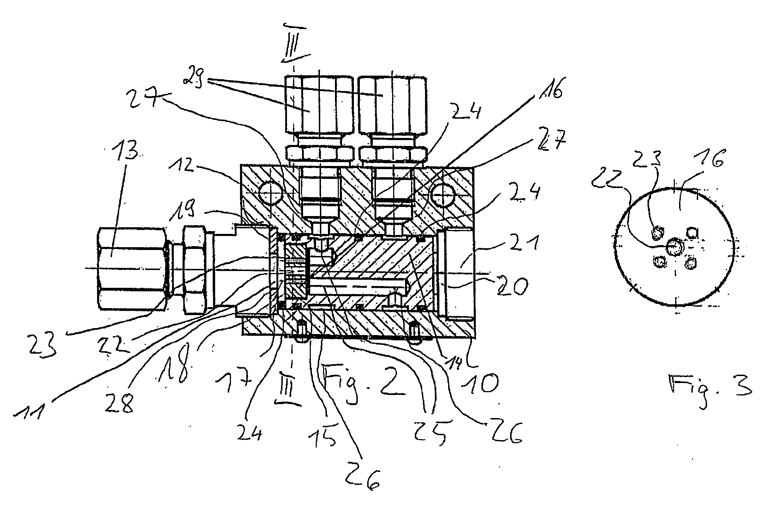

Fig. 2 zeigt eine erfindungsgemäße Vorrichtung zum Aufteilen eines in einer Gasströmung transportierten Schmiermediums. In einem Gehäuse 10 ist zunächst ein Zuströmkanal 11 vorgesehen, mit einem entsprechenden Zuströmanschluss 12, in den eine Schraubhülse 13 eingeschraubt ist.

Angrenzend an den Zuströmkanal 11 befindet sich eine Verteilerhülse 14. Die Verteilerhülse ist im Wesentlichen zylinderförmig ausgebildet und entsprechend in das Gehäuse 10 eingesetzt. In einer Ausnehmung 15, die an einer dem Zuströmkanal 11 zugewandten Seite der Verteilerhülse 14 ausgebildet ist, ist eine Zylinderscheibe 16 angeordnet. Ein an die Zylinderscheibe 16 angrenzender Abschnitt 17 des Zuströmkanals 11 weist eine Querschnittserweiterung 18 auf.

Zwischen Querschnittserweiterung 18 und Schraubhülse 13 ist ein Dichtelement, konkret eine Dichtscheibe 19 angeordnet.

An einem dem Zuströmkanal 11 abgewandten Ende der Verteilerhülse 14 ist eine weitere Dichtscheibe 20 zusammen mit einer Dichtscheibenklemmschraube 21 angeordnet. Die Dichtscheibe 20 zusammen mit der Dichtscheibenklemmschraube 21 dichten die Verteilerhülse 14 nach außen hin ab.

Die Zylinderscheibe 16 weist eine zentrale Bohrung 22 sowie vier dezentrale Bohrungen 23 au (in Fig. 2 sind nur zwei der dezentralen Bohrungen 23 zu sehen; siehe diesbezüglich auch Fig. 3).

In der Querschnittserweiterung 18 befindet sich ein O-Ring 24. Weitere O-Ringe 24 sind in entsprechenden Ausnehmungen der Verteilerhülse 14 an deren Außenumfang vorgesehen.

Die dezentralen Bohrungen 23 sind in quadratischer Konstellation angeordnet und weisen alle den gleichen Abstand zur zentralen Bohrung 22 auf. Die dezentralen Bohrungen 23 münden jeweils in einen Abströmkanal 25 (von denen in Fig. 2 nur zwei zu sehen sind).

An dem Außenumfang der Verteilerhülse 14 sind zwei Ringkammern 26 ausgebildet, die je zwei Ausströmkanäle 25 verbinden und die je zwei Abströmkanäle 25 je einem gemeinsamen Abströmanschluss 27 zuführen.

In die Abströmanschlüsse 27 sind entsprechende Schraubhülsen 29 eingeschraubt.

Die gesamte Vorrichtung bzw. ihre einzelnen Elemente, insbesondere das Gehäuse 10, die Verteilerhülse 14 und/oder die Zylinderscheibe 16 können aus Metall, insbesondere Stahl gefertigt sein.

Die Schmierstoffverteilung kann folgendermaßen ablaufen. Zunächst wird der Schmierstoff mittels Druckluft an Leitungsinnenwänden 28 des Zuströmkanals 11 zu der Zylinderscheibe 16 gefördert. Der Schmierstoff trifft also auf die Zylinderscheibe 16 und staut sich an dieser. Die Druckluft bzw. der Gasstrom strömt durch die zentrale Bohrung 22. Durch die Querschnittsverengung in Form der zentralen Bohrung 22 nimmt die Geschwindigkeit des Luftstroms zu. Somit entsteht hinter der Zylinderscheibe ein Unterdruck, der ein Ansaugen des Schmierstoffes durch die vier dezentralen Bohrungen 22 bewirkt. Diese vier dezentralen Bohrungen 24 münden wiederum in die vier Abströmkanäle 25 der Verteilerhülse 14, wobei der Schmierstoff bzw. das Schmierstoff-Luftgemisch über die zwei Ringkammern 26 an die zwei Abströmanschlüsse 27 ausgegeben werden.

### Bezugszeichenliste

- 1: Druckluftquelle
- 2: Steuerung
- 3: Magnetventil
- 4: Pneumatikpumpe
- 5: Schmierstoffverteiler
- 6: Sprühdüse
- 7a: Druckluftleitung
- 7b: Druckluft-Schmierstoff-Leitung
- 7c: Druckluft-Schmierstoff-Leitung
- 8: Schmierstoffbehälter
- 10: Gehäuse
- 11: Zuströmkanal
- 12: Zuströmanschluss
- 13: Schraubhülse
- 14: Verteilerhülse
- 15: Ausnehmung
- 16: Zylinderscheibe
- 17: Abschnitt
- 18: Querschnittserweiterung
- 19: Dichtscheibe
- 20: Dichtscheibe
- 21: Dichtscheibenklemmschraube
- 22: zentrale Bohrung
- 23: dezentrale Bohrung
- 24: O-Ring
- 25: Abströmkanal
- 26: Ringkanal
- 27: Abströmanschluss
- 28: Leitungsinnenwand
- 29: Schraubhülse

## Patentansprüche

1. Vorrichtung zum Aufteilen eines in einer Gasströmung transportierten Schmiermediums mit einem Gehäuse (10) mit einem einem Zuströmkanal (11) zugeordneten Zuströmanschluss (12) und mit mindestens zwei entsprechenden Abströmkanälen (25) zugeordneten Abströmanschlüssen (27),
wobei unter einem vorbestimmten Mindestdruck und/oder einer vorbestimmten Mindestgeschwindigkeit der Gasströmung das Schmiermedium entlang Leitungsinnenwänden (28) des Zuströmkanals (11) führbar ist/geführt ist, wobei zwischen dem Zuströmkanal (11) und den mindestens zwei Abströmkanälen (25) eine Zylinderscheibe (16) angeordnet ist,
wobei die Zylinderscheibe (16) aus einem gegenüber dem Schmiermedium dichten Material gebildet ist,
**dadurch gekennzeichnet, dass**
die Zylinderscheibe (16) eine zentrale Bohrung (22) aufweist und in der Zylinderscheibe (16) mindestens zwei weitere, dezentrale, axiale Bohrungen (23) vorgesehen sind, die in mindestens zwei Abströmkanäle (25) münden.

2. Vorrichtung nach Anspruch 1,
**dadurch gekennzeichnet, dass**
in einem an die Zylinderscheibe (16) angrenzenden Abschnitt (17) des Zuströmkanals (11) eine insbesondere ringförmige und/oder zylinderförmige und/oder konische Querschnittserweiterung (18) ausgebildet ist.

3. Vorrichtung nach Anspruch 1,
**dadurch gekennzeichnet, dass**
mindestens zwei der dezentralen Bohrungen (23), vorzugsweise alle dezentralen Bohrungen (23) einen gleichen Abstand zu einem Zylinderscheibenzentrum aufweisen.

4. Vorrichtung nach einem der vorhergehenden Ansprüche,
**dadurch gekennzeichnet, dass**
vier dezentrale Bohrungen (23) vorgesehen sind.

5. Vorrichtung nach einem der vorhergehenden Ansprüche,
**dadurch gekennzeichnet, dass**
der Mittelpunkt mindestens einer, vorzugsweise aller dezentralen Bohrungen (23) einen Abstand zum Zylinderscheibenzentrum aufweisen, der größer als 1/5, vorzugsweise größer als 1/3, weiter vorzugsweise größer als 1/2, insbesondere größer als 3/4 des Radius der Zylinderscheibe (16) vom Mittelpunkt und/oder Rand der Zylinderscheibe messend ist.

6. Vorrichtung nach einem der vorhergehenden Ansprüche,
**dadurch gekennzeichnet, dass**
der Radius mindestens einer, vorzugsweise aller dezentralen Bohrungen (23) gegenüber dem Radius der zentralen Bohrung (22) in einem Verhältnis von weniger als 2:3, vorzugsweise weniger als 1:2, weiter vorzugsweise weniger als 1:3, insbesondere weniger als 1:5 steht.

7. Vorrichtung nach einem der vorhergehenden Ansprüche,
**dadurch gekennzeichnet, dass**
mindestens zwei dezentrale Bohrungen (23) einen unterschiedlichen Querschnitt bezüglich Größe und/oder Form aufweisen.

8. Vorrichtung nach einem der vorhergehenden Ansprüche,
**dadurch gekennzeichnet, dass**, wenn mehrals zwei dezentrale Bohrungen vorhanden sind, mindestens zwei dezentrale Bohrungen (23) einen voneinander abweichenden Abstand zu dem Zylinderscheibenzentrum aufweisen.

9. Vorrichtung nach einem der vorhergehenden Ansprüche,
**dadurch, gekennzeichnet, dass**, wenn mehrals zwei dezentrale Bohrungen vorhanden sind, mindestens zwei dezentrale Bohrungen (23) in denselben Abströmkanal (25) münden.

10. Vorrichtung nach einem der vorhergehenden Ansprüche, insbesondere nach Anspruch 3,
**dadurch gekennzeichnet, dass**
mindestens drei, insbesondere alle dezentralen Bohrungen (23) einen gleichen Abstand zu einer jeweilig benachbarten dezentralen Bohrung aufweisen.

11. Vorrichtung nach einem der vorhergehenden Ansprüche,
**dadurch gekennzeichnet, dass**
eine Dicke der Zylinderscheibe (16) gegenüber einem Durchmesser derselben in einem Verhältnis von weniger als 1:1, insbesondere weniger als 1:2, vorzugsweise weniger als 1:3, weiter vorzugsweise weniger als 1:5 steht.

12. Vorrichtung nach einem der vorhergehenden Ansprüche,
**dadurch gekennzeichnet, dass**
eine dem Zuströmkanal (11) zugewandte Seite der Zylinderscheibe (16) konkav ausgebildet ist.

13. Vorrichtung nach einem der vorhergehenden Ansprüche,
**dadurch gekennzeichnet, dass**
die dezentralen Bohrungen (23) als auf der Mantelfläche der Zylinderscheibe verlaufende rinnenförmige Ausnehmungen ausgebildet sind.

14. Vorrichtung nach einem der vorhergehenden Ansprüche,
**dadurch gekennzeichnet, dass**
mindestens zwei Abströmkanäle (25) in einen gemeinsamen Abströmanschluss (27) münden.

## Claims

1. A device for sharing out a lubricant transported in a gas flow, comprising a housing (10) having an inlet connection (12) associated to an inlet conduit (11) and having at least two outlet connections (27) associated to two corresponding outlet conduits (25),
wherein, at a predetermined minimum pressure and/or a predetermined minimum velocity of the gas flow, the lubricant can be guided/is guided along inner conduit walls (28) of the inlet conduit (11),
wherein a cylinder disk (16) is disposed between the inlet conduit (11) and the at least two outlet conduits (25),
wherein the cylinder disk (16) is formed of an impermeable material with respect to the lubricant,
**characterized in that**
the cylinder disk (16) has a central bore (22), and at least two further, off-center, axial bores which open into the at least two outlet conduits (25) are provided in the cylinder disk (16).

2. The device according to claim 1,
**characterized in that**
in a portion (17) of the inlet conduit (11) adjacent to the cylinder disk (16), an e.g. annular and/or cylindrical and/or conical cross-sectional expansion (18) is formed.

3. The device according to claim 1,
**characterized in that**
at least two of the off-center bores (23), preferably all of the off-center bores (23) have an equal distance to a cylinder disk center.

4. The device according to any one of the preceding claims,
**characterized in that**
four off-center bores (23) are provided.

5. The device according to any one of the preceding claims,
**characterized in that**
the center point of at least one, preferably all of the off-center bores (23) has a distance to the cylinder disk center which is larger than 1/5, preferably larger than 1/3, further preferred larger than ½, e.g. larger than 3/4 of the cylinder disk (16) radius when measured from the center point and/or rim of the cylinder disk.

6. The device according to any one of the preceding claims,
**characterized in that**
the radius of at least one, preferably all of the off-center bores (23) has a ratio of less than 2:3, preferably less than 1:2, further preferred less than 1:3, e.g. less than 1:5 as compared to the radius of the central bore (22).

7. The device according to any one of the preceding claims,
**characterized in that**
at least two off-center bores (23) have a different cross-section relative to size and/or shape.

8. The device according to any one of the preceding claims,
**characterized in that**
when more than two off-center bores are present, at least two off-center bores (23) have a mutually different distance to the cylinder disk center.

9. The device according to any one of the preceding claims,
**characterized in that**
when more than two off-center bores are present, at least two off-center bores (23) open into the same outlet conduit (25).

10. The device according to any one of the preceding claims, in particular according to claim 3,
**characterized in that**
at least three, e.g. all of the off-center bores (23) have an equal distance to the respective adjacent off-center bore.

11. The device according to any one of the preceding claims,
**characterized in that**
a thickness of the cylinder disk (16) as compared to a diameter thereof has a ratio of less than 1:1, e.g. less than 1:2, preferably less than 1:3, further preferred less than 1:5.

12. The device according to any one of the preceding claims,
**characterized in that**
a surface of the cylinder disk (16) facing the inlet conduit (11) is formed to be concave.

13. The device according to any one of the preceding claims,
**characterized in that**
the off-center bores (23) are formed as groove-shaped recesses extending on the envelope of the cylinder disk.

14. The device according to any one of the preceding claims,
**characterized in that**
at least two off-center bores (25) open into a common outlet connection (27).

## Revendications

1. Dispositif de répartition d'un fluide de lubrification transporté dans un flux gazeux, avec un boîtier (10) possédant un raccordement d'amenée (12) associé à un canal d'amenée (11) et avec au moins deux raccordements d'évacuation (27) associés à deux canaux d'évacuation (25) correspondants, où, sous une pression minimale prédéterminée et/ou à une vitesse minimale prédéterminée du flux de gaz, le fluide de lubrification est guidable/guidé le long de parois intérieures de conduite (28) du canal d'amenée (11),
où un disque cylindrique (16) est disposé entre le canal d'amenée (11) et les au moins deux canaux d'évacuation (25),
où le disque cylindrique (16) est constitué par un matériau étanche par rapport au fluide de lubrification,
**caractérisé en ce que**
le disque cylindrique (16) présente un alésage central (22) et **en ce qu'**il est prévu dans le disque cylindrique (16) au moins deux autres alésages axiaux décentrés supplémentaires (23) qui débouchent dans au moins deux canaux d'évacuation (25).

2. Dispositif selon la revendication 1,
**caractérisé en ce que**
une extension de section transversale (18) en particulier de forme annulaire et/ou de forme cylindrique et/ou conique est constituée dans une partie (17) du canal d'amenée (11) qui est limitrophe du disque cylindrique (16).

3. Dispositif selon la revendication 1,
**caractérisé en ce que**
au moins deux des alésages décentrés (23), de préférence tous les alésages décentrés (23), présentent un même écartement par rapport à un centre de disque cylindrique.

4. Dispositif selon l'une des revendications précédentes,
**caractérisé en ce que**
quatre alésages décentrés (23) sont prévus.

5. Dispositif selon l'une des revendications précédentes,
**caractérisé en ce que**
le centre d'au moins un, de préférence de tous les alésages décentrés (23) présentent un écartement, par rapport au centre de disque cylindrique, qui est plus grand que 1/5, de préférence plus grand que 1/3, plus préférentiellement plus grand que 1/2, en particulier plus grand que 3/4 du rayon du disque cylindrique (16), mesuré du centre et/ou du bord du disque cylindrique.

6. Dispositif selon l'une des revendications précédentes,
**caractérisé en ce que**
le rayon d'au moins un, de préférence de tous les alésages décentrés (23) se trouve dans un rapport de moins de 2:3, de préférence de moins de 1:2, plus préférentiellement de moins de 1:3, en particulier de moins de 1:5, par rapport au rayon de l'alésage central (22).

7. Dispositif selon l'une des revendications précédentes,
**caractérisé en ce que**
au moins deux alésages décentrés (23) présentent une section transversale différente en termes de taille et/ou de forme.

8. Dispositif selon l'une des revendications précédentes,
**caractérisé en ce que**,
si plus de deux alésages décentrés (23) sont présents, au moins deux alésages décentrés (23) présentent un écartement différent l'un de l'autre par rapport au centre de disque cylindrique.

9. Dispositif selon l'une des revendications précédentes,
**caractérisé en ce que**,
si plus de deux alésages décentrés sont présents, au moins deux alésages décentrés (23) débouchent dans le même canal d'évacuation (25).

10. Dispositif selon l'une des revendications précédentes, en particulier selon la revendication 3,
**caractérisé en ce que**
au moins trois, en particulier tous les alésages décentrés (23) présentent un même écartement par rapport à un alésage décentré respectivement voisin.

11. Dispositif selon l'une des revendications précédentes,
**caractérisé en ce que**
une épaisseur du disque cylindrique (16) se situe dans un rapport de moins de 1:1, en particulier de moins de 1:2, de préférence de moins de 1:3, plus préférentiellement de moins de 1:5, par rapport à un diamètre dudit disque cylindrique (16).

12. Dispositif selon l'une des revendications précédentes,
**caractérisé en ce que**
un côté du disque cylindrique (16) qui est tourné vers le canal d'amenée (11) est constitué de façon concave.

13. Dispositif selon l'une des revendications précédentes,
**caractérisé en ce que**
les alésages décentrés (23) sont constitués comme évidements en forme de goulottes évoluant sur la surface d'enveloppe du disque cylindrique.

14. Dispositif selon l'une des revendications précédentes,
**caractérisé en ce que**
au moins deux canaux d'évacuation (25) débouchent dans un raccordement d'évacuation (27) commun.
